Europäisches Patentamt

European Patent Office

Office européen des brevets

(19)

(11) Numéro de publication : **0 036 799**
**B1**

(12) # FASCICULE DE BREVET EUROPÉEN

(45) Date de publication du fascicule du brevet :
30.01.85

(21) Numéro de dépôt : 81400367.9

(22) Date de dépôt : 10.03.81

(51) Int. Cl.⁴ : **G 01 T   7/02**, G 01 T   1/20

(54) Cellule de mesure pour la surveillance en continu de la concentration du tritium dans l'eau utilisant des billes scintillatrices en quartz dopé.

(30) Priorité : 13.03.80 FR 8005625

(43) Date de publication de la demande :
30.09.81 Bulletin 81/39

(45) Mention de la délivrance du brevet :
30.01.85 Bulletin 85/05

(84) Etats contractants désignés :
BE CH DE GB IT LI

(56) Documents cités :
DE-B- 1 241 001
FR-A- 1 538 607
E.D. BRANSOME: THE CURRENT STATUS OF LIQUID SCINTILLATION COUNTING", 1970, Grune & Stratton, NEW YORK (US), Chapitre 8: E. SCHRAM: "Flow-monitoring of aqueous solutions containing weak beta-emitters", pages 95-109
NUCLEONICS, vol. 19, no. 7, juillet 1961, NEW YORK (US), "Scintillating beads for aqueous solutions", page 82
INSTRUMENTS AND EXPERIMENTAL TECHNIQUES, vol. 17, no. 1, partie 1, janvier-février 1974, WASHINGTON (US), T.N. SEREDENKO et al.: "Scintillation granules in the coincidence method", pages 59-62
IEEE TRANSACTIONS ON NUCLEAR SCIENCE, vol. NS-21, no. 1, février 1974, NEW YORK (US), A.N. SINGH et al.: "A sensitive detector system for the continuous monitoring of tritium in the air", pages 188-193

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur : **Descours, Solange**
**4, rue Alsace Lorraine**
**F-38000 Grenoble (FR)**
Inventeur : **Micheletti, Louis**
**16, Village du Soleil**
**F-13540 Aix en Provence (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

L'invention concerne un dispositif pour la surveillance en continu de la concentration de particules radioactives en suspension dans l'eau, comprenant une cellule de mesure comportant deux hublots et une entrée et une sortie de l'eau à surveiller, deux photomultiplicateurs situés chacun en regard d'un hublot, une enceinte de plomb située autour de la cellule de mesure et des photomultiplicateurs pour assurer la protection de ladite cellule et desdits photomultiplicateurs contre les rayonnements extérieurs ambiants, des circuits hydrauliques assurant la circulation dans la cellule et sa filtration avant son entrée dans celle-ci, et une chaîne de mesure reliée aux photomultiplicateurs pour la mesure de l'activité des contaminants dans l'eau.

On connaît déjà un dispositif de contrôle en continu de la radioactivité de liquides chargés correspondant au préambule de la revendication 1 (FR-A-1 538 607).

Dans l'appareil suivant ce brevet, la surface de contact entre le fluide à surveiller et le scintillateur est faible puisque ce contact est réalisé seulement avec les deux faces délimitant la cavité. D'autre part, il s'agit de scintillateurs plastiques dont le rendement n'est pas très élevé. Un tel dispositif de surveillance ne permet donc pas de surveiller la concentration du tritium dans l'eau par détection de son rayonnement β avec une sensibilité de mesure suffisante, c'est-à-dire inférieure à la « concentration maximale admissible » en tritium dans l'eau pour la population (CMAp).

Le document DE-B-1 241 001 (Deutsche Akademie der Wissenschaft zu Berlin) concerne un scintillateur pour la détection des rayons gamma pour mesurer l'activité de fluides de gaz. Sa cellule de mesure utilise un scintillateur plastique et non pas un scintillateur minéral. La chambre ne possède pas de parois scintillantes.

L'article de E. Schram, pages 95-109 de : E. D. Bransome : « The current status of liquid scintillation counting » 1970, Grune & Stratton, montre une cellule à scintillateur plastique.

L'article « Instruments and experimental techniques », vol. 17, n° 1, partie 1, janv.-févr. 1974, Washington (US) concerne une cellule de mesure dont la chambre est constituée par un cylindre possédant deux fenêtres de sortie, qui ne sont pas réalisées en un matériau scintillant, le scintillateur comportant des billes de matériau plastique scintillateur.

L'article « IEEE Transactions on nuclear science », vol., NS-21, n° 1, février 1974, concerne une cellule de mesure du type détecteur à scintillation adapté à la détection du tritium dans l'air. Les cellules de mesure sont remplies d'une poudre scintillatrice plastique mélangée avec de l'eau distillée avant d'être compactée.

La présente invention a pour but d'apporter un remède à la difficulté de la surveillance en continu de la concentration du tritium dans l'eau avec une grande sensibilité de mesure inférieure à la CMAp. Les difficultés d'une telle mesure proviennent de la faible énergie du rayonnement β émis par le tritium de sorte que le parcours de ce rayonnement dans l'eau est de l'ordre du micron. En conséquence, seuls les rayonnements émis à ces distances peuvent atteindre le matériau scintillateur. Il est donc nécessaire d'augmenter la surface de contact entre le fluide et le matériau scintillateur. En outre, il est nécessaire que ce matériau scintillateur présente un rendement élevé.

L'invention, telle qu'elle est caractérisée dans la revendication 1, résout ce problème au moyen de billes scintillatrices en quartz dopé d'un diamètre inférieur à 1 mm disposées dans la chambre de mesure, qui est délimitée par un panier, les hublots fermant la chambre étant également en quartz dopé et des grilles à maillage fin étant disposées sur l'entrée et sur la sortie de l'eau à surveiller.

Le dispositif selon l'invention, en utilisant des billes scintillatrices et des hublots en quartz dopé, permet de mesurer moins de 1/10 de CMAp en tritium.

Avec des billes de quartz dopé, on a pu obtenir un rapport signal/bruit S/b > 50 pour une CMA, c'est-à-dire pour une concentration en tritium égale à la concentration maximale admissible.

La sensibilité est ainsi au moins dix fois supérieure à celle obtenue avec des billes en matière plastique.

Le fait que les hublots sont en quartz dopé, c'est-à-dire le même matériau que les billes, présente plusieurs avantages. Alors que, dans les dispositifs connus, les hublots jouent le rôle d'une simple séparation entre la chambre de mesure et les détecteurs, dans l'invention, ces hublots participent à la scintillation. La surface de contact avec l'eau est donc augmentée.

La probabilité qu'un rayonnement β qui frappe les hublots soit perçu par les détecteurs est plus élevée que lorsque ce rayonnement frappe les billes, car les détecteurs sont situés juste derrière les hublots.

Enfin, du fait que les hublots sont plus proches des détecteurs, l'angle solide sous lequel ils sont vus est plus grand.

De préférence, la paroi de la chambre comporte, du côté de l'alimentation en eau, une gorge s'étendant sur un arc de cercle légèrement inférieur à 180°, de façon à répartir le liquide d'une façon uniforme à l'intérieur du volume occupé par les billes. Cette disposition permet d'éviter la formation de chemins préférentiels dans la chambre. De cette manière, le fluide contaminé circule autour du maximum de billes pour réaliser la plus grande surface possible de contact. Deux photomultiplicateurs situés de part et d'autre de la cellule détectent les photons émis et délivrent un signal sous forme d'impulsions électriques. Ces impulsions, après amplification, discrimination du bruit de fond, sommation et coïncidence, sont séparées suivant deux classes d'énergie : l'une inférieure à un seuil de discrimination réglable en fonction des radio-éléments présents dans l'eau, comptabilise l'essentiel des impulsions dues au rayonnement β du tritium ; l'autre classe d'énergie, supérieure au seuil de discrimination, totalise les autres impulsions.

D'autres caractéristiques et avantages de l'invention apparaîtront mieux après la description qui suit, d'exemples de réalisation donnés à titre explicatif et nullement limitatif, en référence aux dessins annexés, sur lesquels :

la figure 1 représente une vue schématique du dispositif de surveillance selon l'invention ;

la figure 2 représente une vue, en coupe, du détail de la chambre cylindrique de la cellule ;

la figure 3 représente une vue, en coupe, selon la ligne III-III de la figure 2 ;

la figure 4 représente un synoptique de la partie électronique de dispositif de surveillance selon l'invention.

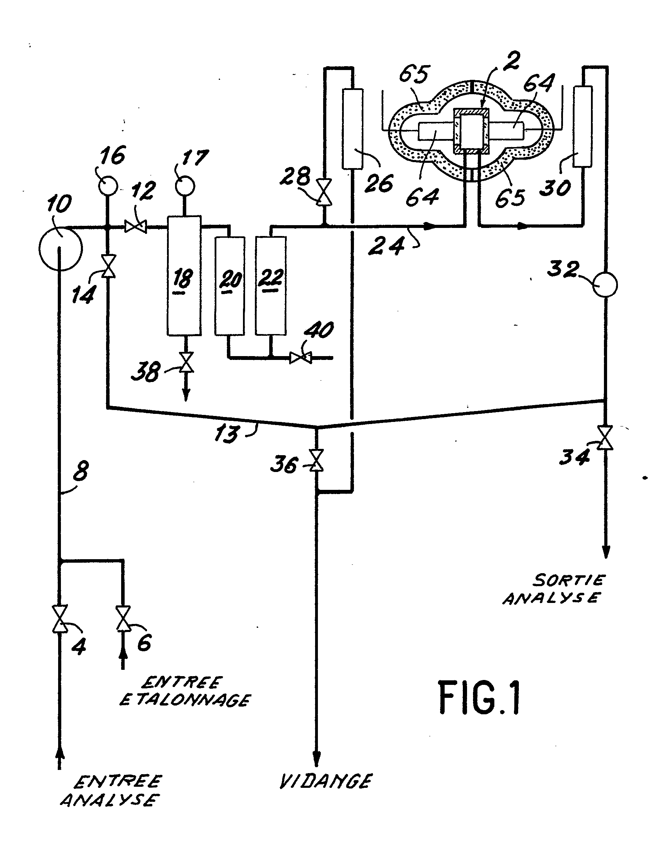

On a représenté sur la figure 1, une vue schématique du dispositif de surveillance selon l'invention. On a désigné par la référence 2 la cellule de mesure. Cette cellule 2 est raccordée à un circuit hydraulique assurant la circulation de l'eau dans celle-ci. Ce circuit hydraulique comprend deux électrovannes 4 et 6 de sélection du prélèvement. L'électrovanne 4 est branchée sur le circuit à surveiller. Elle est ouverte au cours du fonctionnement normal du dispositif de surveillance. L'électrovanne 6 est utilisée pour l'étalonnage du dispositif de mesure. Afin de contrôler la sensibilité de l'appareil, on branche le circuit de prélèvement sur un réservoir d'eau tritiée d'activité connue.

L'eau dont on désire surveiller la concentration en tritium est amenée par une canalisation 8 jusqu'à une pompe 10, par exemple une pompe à engrenage. Le circuit hydraulique comporte encore deux vannes 12 et 14 à commande manuelle qui permettent de régler le débit grâce à la dérivation 13, un manomètre 16 de contrôle de la pression à la sortie de la pompe, et un manomètre 17 de contrôle du colmatage du dispositif de filtrage, un ensemble de filtration comprenant un préfiltre 18, à membrane de porosité 0,51, un filtre défériseur 20, et un filtre à ions d'argent 22. Une canalisation 24 amène l'eau filtrée jusqu'à la cellule de mesure 2. Un volume-tampon 26 avec mise à l'air libre, raccordé au circuit par l'électrovanne 28, sert à la détente du circuit et permet de vider la cellule 2 par siphonnage. Un débitmètre 30 permet de mesurer le débit instantané de la cellule 2. Ce débitmètre est muni d'un contact de défaut de débit minimum qui se ferme lorsque le débit de l'eau tombe en dessous d'une valeur donnée. Un compteur de débit 32 totalise la quantité d'eau passée dans la cellule de mesure. Enfin, le circuit hydraulique comporte deux électrovannes de retour circuit 34 et 36, et deux vannes de vidange 38 et 40.

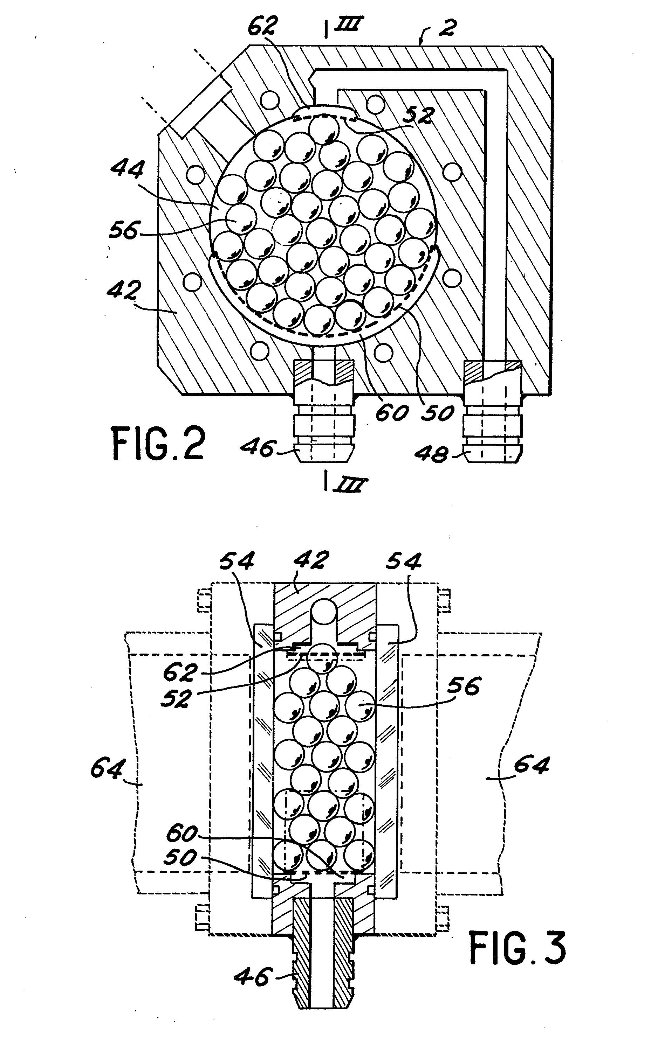

On a représenté sur la figure 2, une vue de détail de la cellule de mesure 2. Elle comporte un panier 42, de forme extérieure parallélépipédique, qui délimite une chambre cylindrique 44. Deux raccords automatiques 46 et 48 raccordés sur le circuit hydraulique assurent la circulation de l'eau dont on veut mesurer la concentration en tritium à l'intérieur de la cellule 2. L'entrée du fluide s'effectue par le raccord 46, et sa sortie par le raccord 48. La circulation s'effectue ainsi de bas en haut, ce qui évite tout emprisonnement de bulles d'air. L'étanchéité entre les raccords 46 et 48 et le reste du circuit est assurée par des joints toriques (non représentés).

Comme on peut le voir sur la figure 3, qui représente une vue en coupe selon la ligne III-III de la cellule de mesure représentée sur la figure 2, la chambre 44 est fermée par deux hublots 54 en quartz dopé. La chambre 44 contient des billes scintillantes 56. Le diamètre de ces billes est inférieur à 1 mm. Elles occupent un volume de 60 cm³.

Ces billes sont en quartz, dopé au cérium, et renfermant des traces de titane et d'alumine.

Ce matériau est un excellent scintillateur sensible aux rayons β de faible énergie comme ceux du tritium.

De plus, les billes en quartz peuvent être facilement régénérées par nettoyage. En effet, l'inertie chimique de ce matériau permet l'utilisation d'acides concentrés qui sont des agents de nettoyage efficaces.

Deux grilles à maillage fin, une grille inférieure 50 et une grille supérieure 52, en acier inoxydable, maintiennent les billes scintillantes 56 dans la chambre 44. Le maillage des grilles 50 et 52 est de 16 μ.

On a pratiqué à l'intérieur de la chambre 44, du côté de l'entrée du fluide une gorge qui s'étend sur un angle au centre, légèrement inférieur à 180°. La gorge 60 a pour fonction de répartir le liquide de façon uniforme à l'intérieur du volume occupé par les billes 56. Il est en effet impératif d'éviter la formation de chemins préférentiels de façon que le fluide chargé de la contamination radioactive circule autour du maximum de billes 56 pour réaliser la plus grande surface possible de contact. Ainsi, dans l'exemple de réalisation décrit, cet angle est de 150°.

D'une manière identique, du côté de la sortie du fluide, on a réalisé une gorge 62 qui facilite la sortie de l'eau hors de la chambre.

Des essais par injection d'un colorant dans de l'eau en amont de la cellule ont permis de mesurer l'homogénéité de la coloration sur toute la surface. Le temps de coloration uniforme du panier est de 6 secondes pour un débit de 20 l/h. Ce temps de coloration de 6 secondes représente ainsi le temps de réponse de la cellule.

Deux photomultiplicateurs 64 à fenêtres de quartz et à bas bruit de fond sont situés de part et d'autre de la cellule 2 contre les hublots en quartz dopé 54.

Une protection de plomb contre les rayonnements extérieurs ambiants entoure la cellule et les deux photomultiplicateurs et se présente sous la forme de deux coquilles semi-sphériques 65 entourant le panier 42 et prolongées par deux cylindres enveloppant les photomultiplicateurs. Ces protections sont montées sur deux barreaux cylindriques par l'intermédiaire de douilles coulissantes.

On accède à la cellule en écartant les deux coquilles 65. La commande de ces coquilles s'effectue à l'aide d'un volant commandé manuellement. Cette protection assure également l'étanchéité à la lumière du scintillateur et des photomultiplicateurs.

La cellule 2 comporte trois modes de fonctionnement : l'analyse, l'étalonnage et la vidange.

L'analyse correspond au fonctionnement normal de la cellule de mesure. Le circuit hydraulique est alors branché directement par l'électrovanne 4 sur le circuit à surveiller. Les électrovannes 4 et 34 sont ouvertes, tandis que les électrovannes 6, 28, 36 sont fermées.

L'étalonnage permet de contrôler la sensibilité de l'appareil en le branchant par l'intermédiaire de l'électrovanne 6 sur un réservoir d'eau tritiée d'activité connue. Les électrovannes 6 et 36 sont alors ouvertes, tandis que les électrovannes 4, 28, 34, sont fermées.

La vidange a lieu après chaque opération d'étalonnage ou avant d'effectuer un changement de cellule. Elle consiste à vider tous les circuits hydrauliques. Les électrovannes 4, 6, 34 sont fermées et les électrovannes 28 et 36 sont ouvertes.

Le fonctionnement du circuit hydraulique est le suivant.

Les vannes de réglage 12 et 14 assurent grâce à la dérivation 13 dans la cellule 2 un débit compris entre 5 et 50 litres par heure tout en conservant un débit de prélèvement constant de 80 l/h environ. Ce dispositif permet de diminuer le temps de réponse entraîné par les volumes morts dus aux tuyauteries de prélèvement, dont la longueur et le diamètre sont importants.

Le débit de mesure est fixé à 20 l/h. La pression dans le circuit est comprise entre 1 et 5 bar.

Les filtres 18, 20 et 22 permettent d'éviter une pollution chimique rapide des billes scintillantes 56, pollution qui aurait pour conséquence une perte de sensibilité à l'activité. On a constaté une perte de sensibilité du scintillateur de 10 % seulement après un passage de 30 m³ d'eau.

Le manomètre 17, le débitmètre 30 et le compteur de débit 32 permettent de contrôler le colmatage des filtres 18, 20 et 22 et de changer ainsi les cartouches de ces filtres en fonction de la qualité de l'eau de prélèvement.

Le volume total du circuit hydraulique est de 6 l, dont 3,8 l pour les filtres.

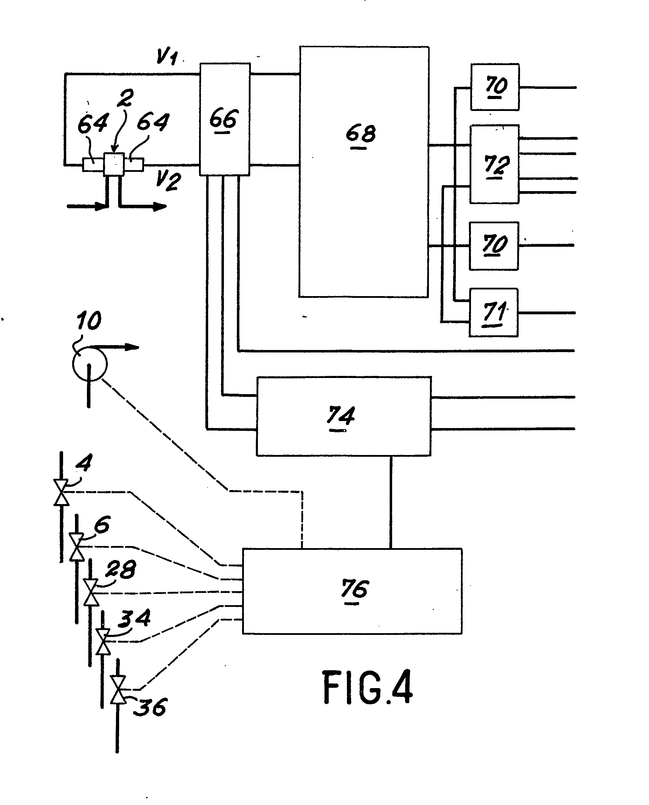

On a représenté sur la figure 4 un synoptique de la partie électronique du dispositif de surveillance selon l'invention.

La chaîne de mesure est constituée par les appareils qui reçoivent le signal du détecteur qui le transforment et l'amplifient. Cette chaîne comprend le scintillateur constitué par les billes 56, les hublots 54 et les photomultiplicateurs 64 disposés de chaque côté de la cellule 2. Un amplificateur-discriminateur 66 assure l'alimentation en haute tension stabilisée, l'amplification et la discrimination du bruit de fond des signaux issus des deux photomultiplicateurs 64. Les signaux amplifiés issus de l'amplificateur 66 sont introduits dans un tiroir de coïncidence 68. Ce circuit ne délivre un signal de sortie d'amplitude convenable que lorsque deux impulsions ont été appliquées simultanément à l'entrée. Il permet en outre de séparer en deux classes d'énergie les impulsions issues des photomultiplicateurs 64. L'utilisateur peut en effet régler un seuil de discrimination ST en fonction de la nature des radioéléments dont la présence dans l'eau que l'on désire contrôler est la plus probable. Une première voie de mesure dite « voie tritium » comptabilise les impulsions inférieures au seuil ST, dues essentiellement aux rayons $\beta$ du tritium, ainsi qu'à une participation plus ou moins importante des autres contaminants de l'eau. L'autre voie de mesure dite « voie de mesure globale » comptabilise les autres impulsions supérieures au seuil de discrimination ST. Ces impulsions sont dues en particulier aux autres contaminants radioactifs de l'eau, à un bruit de fond d'origine nucléaire, cosmique ou provenant du rayonnement $\gamma$ ambiant, et à un faible rayonnement du tritium.

En face avant, un commutateur à deux positions facilite les tests et les réglages en orientant sur une sortie les impulsions des voies $V_1$ et $V_2$.

La chaîne de mesure comporte encore deux tiroirs ictomètres 70, qui indiquent la fréquence moyenne des impulsions qui leur sont appliquées. Ce sont deux ictomètres logarithmiques analogiques. Un galvanomètre gradué en coup par seconde de 0,1 à $10^5$ coups par seconde permet d'apprécier le taux de comptage de la sortie choisie. Une sortie enregistreur est en outre disponible.

Un tiroir de mise en forme 72 assure la mise en forme et l'isolement galvanique des impulsions fournies par le tiroir de coïncidence 68 et permet d'attaquer soit des échelles de comptage, soit des organes centralisés et informatisés.

En 71, on a indiqué l'alarme tritium, qui se déclenche lorsqu'un seuil prédéterminé est dépassé.

Un tiroir de servitude 74 comporte des relais de découplage qui permettent de tester la chaîne de mesure à l'aide d'un générateur d'impulsions extérieures. Ce tiroir de servitude permet également de s'assurer du bon fonctionnement de l'appareil. Il signale en particulier un débit insuffisant d'eau dans le circuit de mesure, un affichage défectueux d'un tiroir électronique et une mauvaise position du commutateur situé sur la face avant du tiroir de coïncidence tritium 68 qui permet de sélectionner la voie de mesure.

Une platine électrique 76 permet de commander l'ensemble de l'appareil. Elle assure en particulier la succession des différentes phases de fonctionnement : analyse, étalonnage et vidange. Ces opérations, commandées par trois boutons poussoirs situés sur la face avant de l'appareil, peuvent être suivies sur un synoptique fonctionnel.

## Revendications

1. Dispositif pour la surveillance en continu de la concentration du tritium dans l'eau, comprenant une cellule de mesure (2) comportant deux hublots (54) et une entrée (46) et une sortie (48) de l'eau à surveiller, deux photomultiplicateurs (64) situés chacun en regard d'un des hublots (54), une enceinte (65) de plomb située autour de la cellule de mesure et des photomultiplicateurs (64) pour assurer la protection de ladite cellule et desdits photomultiplicateurs contre les rayonnements extérieurs ambiants, des circuits hydrauliques assurant la circulation de l'eau dans la cellule (2) et sa filtration avant son entrée dans celle-ci, et une chaîne de mesure reliée aux photomultiplicateurs pour la mesure de l'activité des contaminants dans l'eau, caractérisé en ce que la cellule de mesure (2) comprend :
— un panier (42) délimitant une chambre cylindrique (44), fermée par les deux hublots (54) en quartz dopé, des grilles à maillage fin étant disposées sur l'entrée (46) et sur la sortie (48) de l'eau à surveiller ;
— des billes scintillatrices en quartz dopé (56), d'un diamètre inférieur à 1 mm, disposées dans la chambre (44).

2. Dispositif de surveillance selon l'une quelconque des revendications 1 et 2, caractérisé en ce que la paroi de la chambre cylindrique (44) comporte, du côté de l'alimentation (46) en eau, une gorge (60) s'étendant sur un arc légèrement inférieur à 180°, de manière à répartir l'eau de façon uniforme à l'intérieur du volume occupé par les billes (56).

3. Dispositif de surveillance selon l'une quelconque des revendications 1 à 3, caractérisé en ce que le circuit hydraulique comporte un préfiltre (18) à membrane, un filtre retenant les particules de fer (20) et un filtre à ions d'argent (22).

## Claims

1. Apparatus for the continuous monitoring of the concentration of tritium in water, comprising a measuring cell having two windows (54), one inlet (46) and one outlet (48) for water to be monitored, two photomultipliers (64) each located to face one of the windows (54), a lead box (65) situated around the measurement cell and the photomultipliers (64) to ensure protection of said cell and said photomultipliers against external ambient radiation, hydraulic circuits ensuring circulation of water in the cell (2) and filtration thereof before its entry therein, and a measurement circuit linked to the photomultipliers to measure the activity of contaminants in the water, characterized in that the measuring cell (2) comprises :
— a basket (42) delimiting a cylindrical chamber (44), closed by the two doped quartz windows (54), fine mesh grilles being located a the inlet (46) and the outlet (48) for water to be monitored :
— doped quartz scintillation beads (56), having a diameter less than 1 mm, located in the chamber (44).

2. A monitoring device according to either of Claims 1 and 2 characterized in that the wall of the cylindrical chamber (44) comprises on the water feed side (46), a groove (60) extending over an arc slightly less than 180°, whereby to distribute the water in uniform fashion into the interior of the volume occupied by the beads (56).

3. Monitoring apparatus according to any one of Claims 1 to 3, characterized in that the hydraulic circuit comprises a membrane pre-filter (18), a filter (20) retaining iron particles, and a silver-ion filter (22).

## Ansprüche

1. Vorrichtung zur kontinuierlichen Überwachung der Konzentration von Tritium im Wasser, mit einer Meßzelle (2) die zwei Fenster (54), einen Einlaß (46) und einen Auslaß (48) für das zu überwachende Wasser aufweist, zwei Fotoelektronenvervielfachern (64), die jeweils den Fenstern (54) gegenüberliegend angeordnet sind, einem um die Meßzelle und die Fotoelektronenvervielfacher (64) angeordneten Bleimantel (65), um den Schutz der Zelle und der Fotoelektronenvervielfacher gegen äußere Umgebungsstrahlung sicher zu stellen, mit hydraulischen Kreisen, die die Zirkulation des Wassers in der Zelle (2) und dessen Filterung vor seinem Eintritt sicher stellen, und mit einer mit den Fotoelektronenvervielfachern verbundenen Meßanordnung um die Aktivität der Kontamination in dem Wasser zu messen dadurch gekennzeichnet, daß die Meßzelle (2) umfaßt :
— einen eine zylindrische Kammer (44) begrenzenden Korb (42), der durch die zwei Fenster (54) aus dotiertem Quarz geschlossen ist, wobei feinmaschige Gitter an dem Einlaß (46) und dem Auslaß (48) für das zu überwachende Wasser angeordnet sind,
— Szintilationskugeln (56) aus dotiertem Quarz mit einem Durchmesser von weniger als 1 mm, die in der Kammer (44) angeordnet sind.

2. Vorrichtung zum Überwachen nach Anspruch 1, dadurch gekennzeichnet, daß die Wand der zylindrischen Kammer (44) auf der Einlaßseite (46) für das Wasser eine Nut (60) aufweist, die sich über einen Bogen von etwas weniger als 180° derart erstreckt, daß das Wasser gleichförmig im Inneren des von den Kugeln (56) beanspruchten Volumens verteilt wird.

3. Vorrichtung zum Überwachen nach Anspruch 1 oder 2, dadurch gekennzeichnet, daß der hydraulische Kreis ein Membranvorfilter (18), ein Eisenteilchen zurückhaltendes Filter (20) und ein Silberionenfilter (22) umfaßt.

FIG.1

65 2 64

28 26 64

64 65 30

16 17

12

10 24

32

18 20 22

14

40

38

13 36

34

8

4 6

ENTREE
ETALONNAGE

SORTIE
ANALYSE

ENTREE
ANALYSE

VIDANGE

FIG.2

FIG.3

FIG.4